# EUROPEAN PATENT SPECIFICATION

(11) **EP 1 715 562 B1**
(45) Date of publication and mention of the grant of the patent: **14.11.2012**
(21) Application number: 05008827.7
(22) Date of filing: 22.04.2005
(51) Int. Cl.: H02K 3/52, H02K 3/47, H02K 15/00, H02K 3/50

(54) **Connection system for electric motors**
Verbindungssystem für elektrische Motoren
Système de raccordement pour moteurs électriques

(43) Date of publication of application: 25.10.2006
(73) Proprietor: INFRANOR HOLDING S.A., 1400 Yverdon-les-Bains (CH)
(72) Inventor: Bote Salla, Ramon, 08100 Sant Fost de Campcentelles 58 (ES); Tassinario, Giampiero, 50129 Florence (IT)
(74) Representative: Bugnion Genève

(56) References cited:
- EP-A2- 1 289 065
- US-A1- 2003 094 879
- US-A1- 2003 186 594

## Description

This invention concerns a system for the electrical connection of encapsulated slotless stator windings in the laminated stator ring where the winding is inserted.

This is meant in particular for brushless motors with axial flow permanent magnets although it can be extended to radial flow motors.

The present invention introduces the idea of an encapsulated winding connection system for this type of stator with a cable opening designed for fast connection.

As such, the process of encapsulation of windings of a stator is known in the art of electrical motors. For example, US patent 4 067 562 discloses a method for encapsulating and impregnating windings of motor stators.

Document EP-A-1 289 065 discloses a connection piece made of electrically conductive material, comprising "n" individual pieces each with a cable exit and "n-1" between said individual piece, said individual pieces being joined together by back parts of the same electrically conductive material.

In addition, for a winding encapsulation that provides good thermal evacuation, it is essential that the thermal conductivity of the resin is high and also that porousness does not decrease the overall system conductivity. To achieve this it is necessary to vacuum-encapsulate the material in order to absorb the least air possible.

However, in order to leave the connection cable accessible from outside for an easy handling (for example connection of cables), there must not be any leftover of epoxy resin in contact with the exit cables, as these will react with high levels of mechanical rigidity, making such connection difficult.

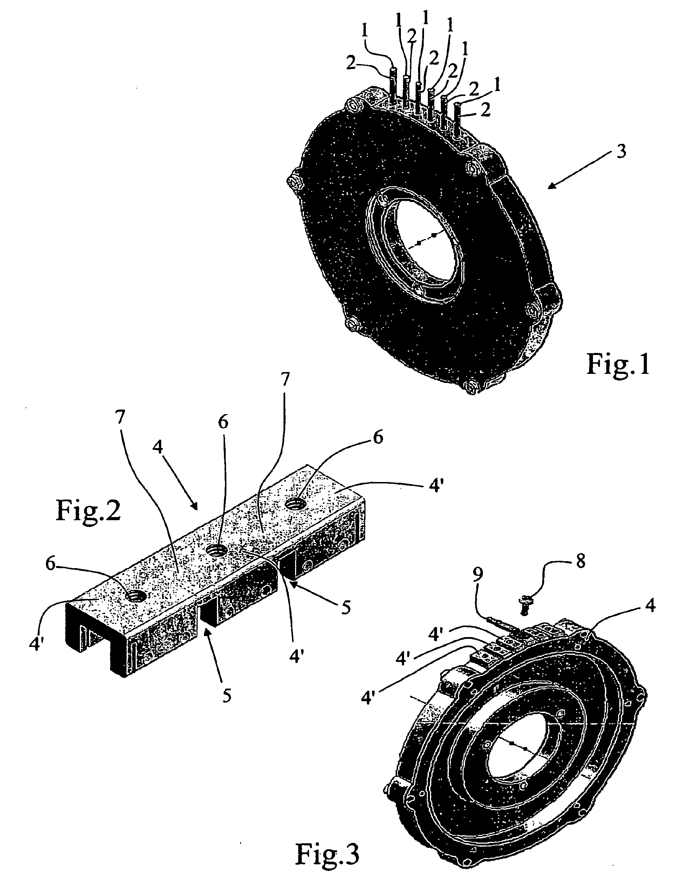

In the art, a solution is the one shown in Figure 1, which represents the exit cables 1 with their insulation 2. The problem is that this insulation 2 is porous: when they are vacuum-encapsulated, the resin filters through said insulation and the cables become stiff. As a consequence, the insulation 2 may be damaged.

In addition, if the cables and their ends are also encapsulated, or at least partially encapsulated, they are difficult, if not impossible to disconnect from or to reconnect to the stator.

It is therefore an object of the present invention to improve the known systems.

It is another objective of the present invention to solve the mentioned connection problems in a simple, secure and inexpensive way.

The method of connecting according to the present invention is defined in claim 1.

The invention will be best understood by description of an embodiment and of the accompanying drawings, in which
Figure 1 shows a winding encapsulation according to the prior art;
Figure 2 shows an example of the connection piece according to the invention;
Figure 3 shows an encapsulated winding with the connection piece of the invention.

In figure 1, as mentioned above, the winding is encapsulated (show generally with reference 3) with the cables 1 attached. As indicated, the insulation 2 of the cables 1 is usually porous so that the resins used for encapsulation, with time, filters through the insulation 2 and the cables are then rigid. Moreover, a cable can not be exchanged since its connection is also encapsulated.

In order to solve this problem (if the cables come ready for connection, the connection time is optimized), this invention uses an intermediary connection piece (referenced generally with 4) made of Cu, or another suitable conducting material, as a connection piece.

This solution eliminates the problem of vacuum-encapsulation, as the non-porous state of the material used for the connection piece 4 does not allow the resin to filter through to the cable. This piece 4 is similar to that which is used as a collector in the patent EP-A-40163.

The connection piece 4 comprises a slotted piece of copper with 'n-1' cuts 5, 'n' being the number of cable exits 6.

Although the cuts 5 are deep, they do not cut the cable in two. As shown, in Figure 2, there are two cuts 5 for three cable exits 6.

Before the encapsulation process, the winding of the stator is connected to each of these exits 6, for example by a screw of other means. The entire piece 4 is then encapsulated with the stator so that the resin also fills the cuts 5.

Then a machining step is used to eliminate the back parts 7 of the piece 4 joining the cable exits 6 to each other, and the resin that fills the spaces hence not only serves to fasten the resulting individual connection pieces but also works as insulation.

Indeed, by the machining step suppressing back part 7, each exit will be on an individual piece 4', all electrically isolated from each other.

Since the resulting pieces 4' are solid (for example made of metal), a screw 8 (see figure 3) can be used to connect the cable 9 through threads made in the exits 6 (see figure 2), thus allowing a fast cable connection and disconnection.

The connection piece may be resumed to a piece like 4' one piece for one cable exit so the machining step to suppress back part it is not yet necessary. Nevertheless, the fixing on "n" pieces in the mold before the encapsulation process is time consuming.

In figure 3, one can easily see the individual pieces 4' which are each connected to a phase of the motor.

Of course, the connection piece is not limited to the representation of figure 2 and may have more than three exits 6.

The possibility of encapsulating the stator winding independently from the laminated stator ring allows for a flexible mounting with the following remarkable advantages:
- Possibility of recycling, ecologically better
- Possibility of manipulating the laminated stator ring without damaging the winding
- Spare parts cheaper

## Claims

1. A method of connecting the stator (4) of an electric motor to a connection piece (4) made by an electrically conductive material, comprising "n" individual pieces (4') each with a cable exit (6) and "n-1" cuts (5) between said individual pieces (4'), said individual pieces (4') being joined together by back parts (7) of the same electrically conductive material, comprising the following steps:
- connecting "n" ends of the windings to the "n" cable exits (6) of said "n" individuals pieces (4') of the connection piece (4)
- encapsulating the connection piece (4) with the stator so that the resin also fills the "n-1" cuts (5);
- suppressing the back parts (7) by machining.

2. An encapsulated stator made according to the method defined in claim 1.

3. An electrical motor comprising an encapsulated stator as defined in claim 2.

## Patentansprüche

1. Ein Verfahren zum Verbinden des Stators (4) eines Elektromotors mit einem Anschlußstück (4) aus einem elektrisch leitfähigen Material, umfassend "n" Einzelstücke (4') jeweils mit einem Kabelausgang (6) und "n-1 "Schnitte (5) zwischen den einzelnen Stücken (4'), wobei die einzelnen Stücke (4') miteinander durch hintere Teile (7) aus dem gleichen elektrisch leitfähigen Material verbunden sind, umfassend die folgenden Schritte:
- Verbinden von "n" Enden der Wicklungen mit den "n" Kabelausgängen (6) der "n" einzelnen Stücke (4') des Anschlußstücks (4);
- Einkapseln des Anschlußstücks (4) mit dem Stator so dass das Harz auch die "n-1" Schnitte (5) füllt;
- Wegnehmen der hinteren Teile (7) durch maschinelle Bearbeitung.

2. Ein eingekapselter Stator, hergestellt gemäß dem Verfahren nach Anspruch 1.

3. Ein elektrischer Motor, umfassend einen eingekapselten Stator nach Anspruch 2.

## Revendications

1. Procédé de raccordement du stator (4) d'un moteur électrique à une pièce de raccordement (4) fait d'un matériau électriquement conducteur, comprenant "n" éléments individuels (4') chacun avec une sortie de câble (6) et "n-1" découpes (5) entre lesdites pièces individuelles (4'), lesdites pièces individuelles (4') étant reliées entre elles par des parties arrières (7) du même matériau conducteur électriquement, comprenant les étapes suivantes:
- raccorder "n" extrémités des enroulements aux "n" sorties de câbles (6) des "n" éléments individuels (4') de la pièce de raccordement (4)
- encapsuler la pièce de raccordement (4) avec le stator de telle sorte que la résine remplit également les "n-1" découpes (5);
- supprimer les parties arrières (7) par usinage.

2. Un stator encapsulé construit selon le procédé défini dans la revendication 1.

3. Un moteur électrique comprenant un stator encapsulé tel que défini dans la revendication 2.
